# EUROPEAN PATENT APPLICATION

(11) **EP 4 811 744 A1**
(43) Date of publication of application: **23.09.2026**
(21) Application number: 25164674.1
(22) Date of filing: 19.03.2025
(51) Int. Cl.: H04L 45/02, H04L 41/12, H04L 41/14, H04W 40/24

(54) **OUTPUT APPARATUS**

(71) Applicant: Toshiba TEC Kabushiki Kaisha, Tokyo 141-8562 (JP)
(72) Inventor: Sato, Naoya, Tokyo, 141-8562 (JP)
(74) Representative: Bandpay & Greuter

(57) **Abstract**

According to an embodiment, an output apparatus is an output apparatus as a first node in a network including the first node and a second node. The output apparatus generates a directed graph including a first vertex corresponding to a transmission source node of a packet, a second vertex corresponding to a transmission destination node that is a transmission destination of the packet of the transmission source node, and an edge having the first vertex as a tail and the second vertex as a head.

## Description

### FIELD

An embodiment to be described here generally relates to an output apparatus.

### BACKGROUND

There are output apparatuses such as printers that constitute a mesh network. For these printers, as a method for outputting a general figure of the mesh network that they constitute to a user, there is a method of displaying the general figure on a display.

However, in such a method, it is difficult to display the general figure of the network as long as there is no large display.

### BRIEF DESCRIPTION OF THE DRAWINGS

Fig. 1 is a block diagram showing an example of a mesh network that output apparatuses according to an embodiment constitute.
Fig. 2 is a block diagram showing an example of a hardware configuration of the output apparatus according to the embodiment.
Fig. 3 is a block diagram showing an example of a functional configuration of the output apparatus according to the embodiment.
Fig. 4 is a diagram showing an example of a screen that is displayed by the output apparatus according to the embodiment on an operation panel.
Fig. 5 is a diagram showing an example of a data structure of a routing table stored in the output apparatus according to the embodiment.
Fig. 6 is a flowchart showing an example of in the output apparatus according to the embodiment.
Fig. 7 is a diagram showing an example of the information rendered in the rendering region in the output processing in the output apparatus according to the embodiment.
Fig. 8 is a diagram showing an example of the information rendered in the rendering region in the output processing in the output apparatus according to the embodiment.
Fig. 9 is a diagram showing an example of the information rendered in the rendering region in the output processing in the output apparatus according to the embodiment.
Fig. 10 is a diagram showing an example of the information rendered in the rendering region in the output processing in the output apparatus according to the embodiment.
Fig. 11 is a diagram showing an example of the information rendered in the rendering region in the output processing in the output apparatus according to the embodiment.
Fig. 12 is a diagram showing an example of a general directed graph corresponding to a general figure of a mesh network, which is based on the output processing in the output apparatus according to the embodiment.
Fig. 13 is a diagram showing an example of a general directed graph corresponding to a general figure of a mesh network, which is based on the output processing in the output apparatus according to the embodiment.
Fig. 14 is a diagram showing an example of a data structure of a routing table stored in a representative output apparatus according to a modification.
Fig. 15 is a flowchart showing an example of output processing in a representative output apparatus according to the modification.

### DETAILED DESCRIPTION

According to an embodiment, an output apparatus is an output apparatus as a first node in a network including the first node and a second node. The output apparatus includes: an input device; an output device; a routing table; and a processor. The input device inputs an output instruction of a directed graph. The directed graph includes a first vertex corresponding to a transmission source node that is a transmission source of a packet, a second vertex corresponding to a transmission destination node that is a transmission destination of the packet of the transmission source node, and an edge having the first vertex as a tail and the second vertex as a head. The output device outputs the directed graph. The routing table stores routing information of the first node and the second node in the network. The processor is configured to receive the output instruction of the directed graph input by the input device. The processor is further configured to refer to the routing information stored in the routing table in accordance with the output instruction upon receiving the output instruction of the directed graph to generate the directed graph in which the first node is associated with the transmission source node and the second node is associated with the transmission destination node. The processor is further configured to cause the output device to output the generated directed graph.

An output apparatus according to an embodiment will be described below with reference to the drawings. In the drawings, the same reference symbols denote the same or similar portions.

### 1. Configuration

A configuration of the output apparatus according to the embodiment will be described first.

### 1.1 Mesh network

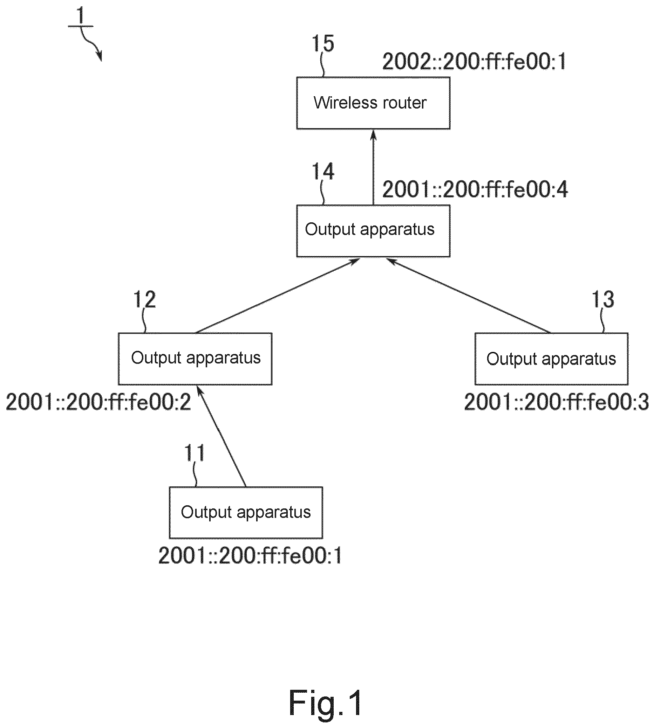

Fig. 1 is a block diagram showing an example of a configuration of a mesh network that output apparatuses according to the embodiment constitute.

A mesh network 1 includes a plurality of nodes as components. The mesh network 1 is a network in which data is communicated via other nodes when a target node communicates with an external network.

As shown in Fig. 1, the mesh network 1 includes, as nodes, a plurality of output apparatuses 11, 12, 13, and 14, and a wireless router 15. The wireless router 15 is a device that connects the plurality of output apparatuses 11 to 14 in the mesh network 1 to the external network.

The plurality of output apparatuses 11 to 14 has configurations equivalent to each other. For example, the plurality of output apparatuses 11 to 14 is an internet of things (IoT) device such as a printer, an electronic price tag, and an electronic calculator. Examples of the printer that is applicable to the plurality of output apparatuses 11 to 14 include a receipt printer and a barcode printer attached to a mobile point-of-sale (POS) device. However, the present technology is not limited thereto, and an arbitrary printer such as a multifunction peripheral (MFP) is applicable. Further, the printer applied to the plurality of output apparatuses 11 to 14 may be a thermal printer or an inkjet printer.

In the example shown in Fig. 1, the output apparatus 11 is connected to the output apparatus 12 that is a transmission destination of data. The output apparatus 12 is connected to an output apparatus 14 that is a transmission destination of data. The output apparatus 13 is connected to the output apparatus 14 that is a transmission destination of data. The output apparatus 14 is connected to the wireless router 15 that is a transmission destination of data.

Further, in the example shown in Fig. 1, an IP address of the output apparatus 11 is assumed to be "2001::200::ff::fe00:1". An IP address of the output apparatus 12 is assumed to be "2001::200::ff::fe00:2". An IP address of the output apparatus 13 is assumed to be "2001::200::ff::fe00:3". An IP address of the output apparatus 14 is assumed to be "2001::200::ff::fe00:4". An IP address of the wireless router 15 is assumed to be "2002::200::ff::fe00:1". Note that although the example in which an IP address based on internet protocol version 6 (IPv6) is assigned has been described in the example shown in Fig. 1, the present technology is not limited thereto. For example, the IP address may be based on IPv4.

### 1.2 Hardware configuration

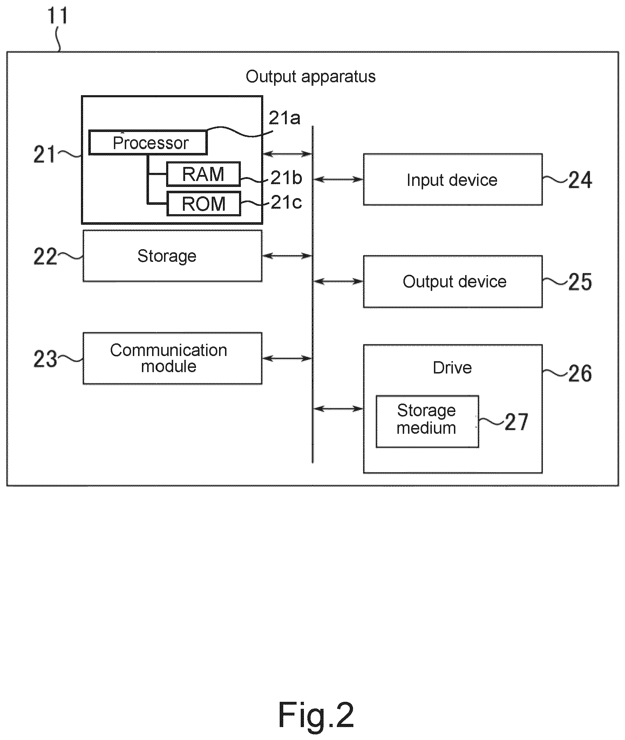

Fig. 2 is a diagram showing an example of a hardware configuration of the output apparatus according to the embodiment. Fig. 2 shows a hardware configuration of the output apparatus 11. Note that the output apparatuses 12 to 14 also have hardware configurations equivalent to that of the output apparatus 11.

As shown in Fig. 2, the output apparatus 11 includes a control circuit 21, a storage 22, a communication module 23, an input device 24, an output device 25, a drive 26, and a storage medium 27.

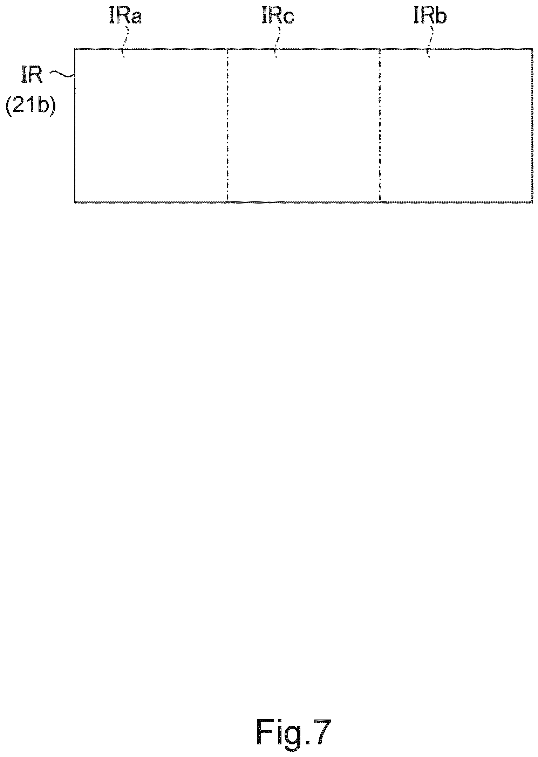

The control circuit 21 is as circuit that comprehensively controls the components of the output apparatus 11. The control circuit 21 includes a processor 21a. The processor 21a is, for example, a central processing unit (CPU). Further, the control circuit 21 includes memories such as a random access memory (RAM) 21b and a read only memory (ROM) 21c. The ROM 21c of the control circuit 21 stores a program and the like to be used by the output apparatus 11 in various types of processing. The processor 21a of the control circuit 21 comprehensively controls the output apparatus 11 in accordance with the program stored in the ROM 21c of the control circuit 21. The RAM 21b of the control circuit 21 has a work area of the processor 21a of the control circuit 21. The work area includes a rendering region IR (see Fig. 7) in which information to be output in the output processing described below is rendered.

The storage 22 includes, for example, a hard disk drive (HDD) or a solid state drive (SSD). The storage 22 stores information to be used in various types of processing in the output apparatus 11.

The communication module 23 is a circuit that is used for data transmission/reception between the output apparatus 11 and a node (e.g., the output apparatus 12) that constitutes the mesh network 1.

The input device 24 is a device in charge of the reception of an input from a user. The input device 24 includes, for example, an operation panel. The operation panel can be a touch panel for displaying a button that functions as a software key.

The output device 25 is a device in charge of the output to the user. In the case where the output apparatus 11 is a printer, the output device 25 includes, for example, a device group for paper output. More specifically, in the case where the output apparatus 11 is a thermal printer, the output device 25 includes a platen roller, a thermal head, a cutter, and the like. Further, in the case where the output apparatus 11 is an electronic price tag or an electronic calculator, the output device 25 includes, for example, a display for image output. The display for image output can also serve as the touch panel. Note that the size of the paper or image output by the output device 25 can be, for example, substantially a receipt size. More specifically, for example, the size of the paper or image output by the output device 25 can be a size of approximately 5 cm × 10 cm.

The drive 26 is a device for reading software stored in the storage medium 27. The drive 26 includes, for example, a compact disk (CD) drive or a digital versatile disk (DVD) drive.

The storage medium 27 is a medium that stores software using electrical, magnetic, optical, mechanical, or chemical effects. The storage medium 27 may store a program for executing various types of processing in the output apparatus 11.

### 1.3 Functional configuration

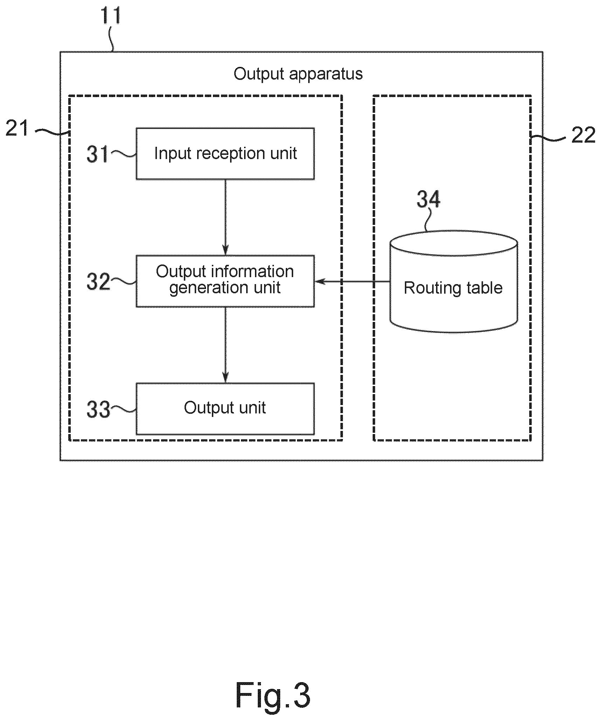

Fig. 3 is a block diagram showing an example of a functional configuration of the output apparatus according to the embodiment. Fig. 3 shows a functional configuration of the output apparatus 11. Note that the output apparatuses 12 to 14 also have functional configurations equivalent to that of the output apparatus 11.

As shown in Fig. 3, the processor 21a of the control circuit 21 develops a program stored in the ROM 21c of the control circuit 21 or the storage medium 27 into the RAM 21b of the control circuit 21. The processor 21a of the control circuit 21 interprets and executes the program developed into the RAM 21b of the control circuit 21. As a result, the output apparatus 11 functions as a computer including an input reception unit 31, an output information generation unit 32, and an output unit 33. Further, the storage 22 of the output apparatus 11 stores a routing table 34.

The input reception unit 31 is a functional block that receives an input from a user. The input reception unit 31 notifies, upon receiving an input indicating that output processing should be started from the user, the output information generation unit 32 of the start of output processing.

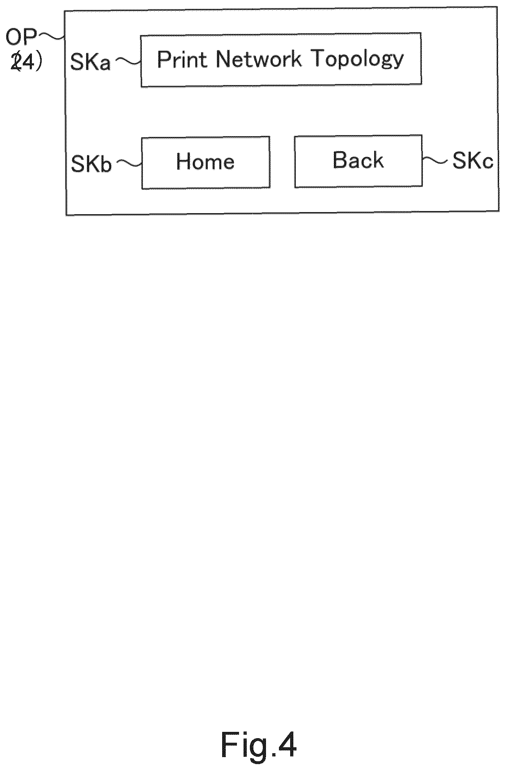

Fig. 4 is a diagram showing an example of a screen that is displayed on an operation panel of the input device 24 by the output apparatus according to the embodiment. As shown in Fig. 4, the input reception unit 31 of the input device 24 displays buttons SKa, SKb, and SKc on an operation panel OP.

The button Ska is a software key that corresponds to a region in a frame surrounding a character string "Print Network Topology" on the operation panel OP and receives an input indicating that output processing should be started. When a user presses the button Ska, the input reception unit 31 notifies the output information generation unit 32 of the start of output processing.

The button SKb a software key that corresponds to a region in a frame surrounding a character string "Home" on the operation panel OP and receives an input indicating that the screen should transition to the home screen. When the user presses the button SKb, the input reception unit 31 changes the display on the operation panel OP to the home screen.

The button SKc is a software key that corresponds to a region in a frame surrounding a character string "Back" on the operation panel OP and receives an input indicating that the screen should transition to the screen should transition to the screen displayed immediately before on the operation panel OP. When the user presses the button SKc, the input reception unit 31 returns the display on the operation panel OP to the display screen immediately before.

The functional configuration of the output apparatus 11 will be described with reference to Fig. 3 again.

The output information generation unit 32 is a functional block that generates, upon receiving a notification of the start of output processing from the input reception unit 31, information (output information) to be output to the user as a result of the output processing. Specifically, the output information generation unit 32 generates a rendering region on the RAM 21b of the control circuit 21. The output information generation unit 32 then renders predetermined information in the rendering region by referring to the routing table 34. The output information generation unit 32 transmits the information rendered in the rendering region to the output unit 33 as generation information.

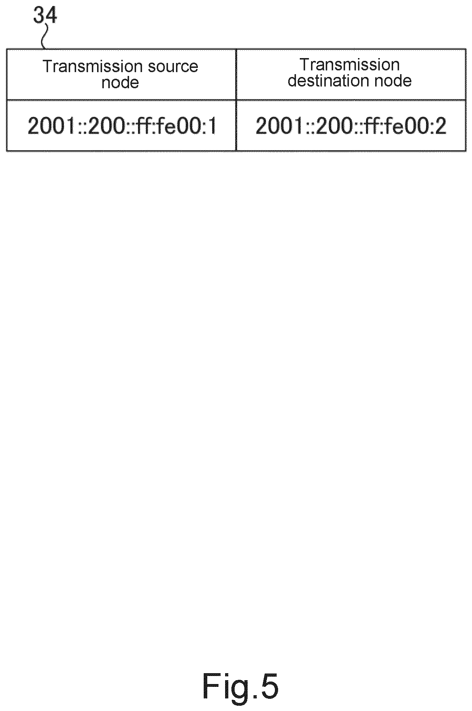

Fig. 5 is a diagram showing an example of a data structure of a routing table stored in the output apparatus according to the embodiment. As shown in Fig. 5, the routing table 34 stores, as routing information in the mesh network 1, a pair of an IP address of a transmission source node and an IP address of a transmission destination node when its own output apparatus transmits data.

That is, the information stored as a transmission source node corresponds to the IP address of its own output apparatus. The information stored as a transmission destination node corresponds to the IP address of the output apparatus to which its own output apparatus transmits data. In the example shown in Fig. 5, the information stored as a transmission source node is the IP address "2001::200::ff::fe00:1" of the output apparatus 11. Further, the information stored as a transmission destination node is the IP address "2001::200::ff::fe00:2" of the output apparatus 12.

Note that in the routing table 34 stored in the output apparatus 12, the information stored as a transmission source node is the IP address "2001::200::ff::fe00:2" of the output apparatus 12 although the description is omitted in Fig. 5. Further, the information stored as a transmission destination node is the IP address "2001::200::ff::fe00:4" of the output apparatus 14.

In the routing table 34 stored in the output apparatus 13, the information stored as a transmission source node is the IP address "2001::200::ff::fe00:3" of the output apparatus 13. Further, the information stored as a transmission destination node is the IP address "2001::200::ff::fe00:4" of the output apparatus 14.

In the routing table 34 stored in the output apparatus 14, the information stored as a transmission source node is the IP address "2001::200::ff::fe00:4" of the output apparatus 14. Further, the information stored as a transmission destination node is the IP address "2002::200::ff::fe00:1" of the wireless router 15.

The functional configuration of the output apparatus 11 will be described with reference to Fig. 3 again.

The output unit 33 is a functional block that outputs, upon receiving output information from the output information generation unit 32, the output information to the user. Specifically, in the case where the output device 25 includes a device group for paper output, the output unit 33 outputs the output information via paper. Further, in the case where the output device 25 includes a device group for image output, the output unit 33 outputs the output information as an image. Details of the output information will be described below.

### 2. Operation

Next, an operation of the output apparatus according to the embodiment will be described.

### 2.1 Output processing

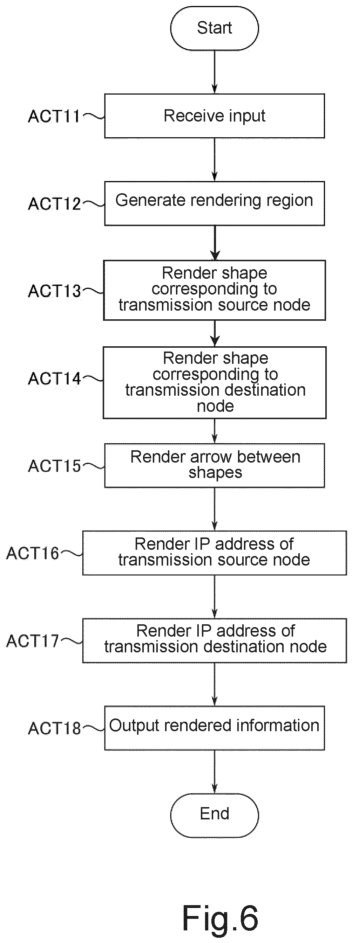

Fig. 6 is a flowchart showing an example of the output processing in the output apparatus according to the embodiment. Fig. 7 to Fig. 12 are each a diagram showing an example of information rendered in a rendering region in output processing according to an embodiment. Fig. 7 to Fig. 12 respectively correspond to rendering regions in the processing of ACT12 to ACT17 shown in Fig. 6 in the output processing executed by the output apparatus 11.

As shown in Fig. 6, when the user presses the button Ska on the operation panel OP (Start), the input reception unit 31 receives an input indicating that output processing should be started (ACT11).

Upon receiving an input indicating that output processing should be started, the output information generation unit 32 generates the rendering region IR on the RAM 21b of the control circuit 21 as shown in Fig. 7 (ACT12).

The rendering region IR has a shape corresponding to a medium to which the output information is output (paper output from a printer or a screen displayed on an electronic price tag and an electronic calculator). In the example shown in Fig. 7, the rendering region IR has a horizontal rectangular shape. Further, the rendering region IR includes three sub-regions IRa, IRb, and IRc aligned horizontally. The sub-region IRa is a region that is located at the left end of the rendering region IR, and information regarding a transmission source node is rendered in the sub-region IRa. The sub-region IRb is a region that is located at the right end of the rendering region IR, and information regarding a transmission destination node is rendered in the sub-region IRb. The sub-region IRc is a region that is located between the sub-regions Ira and IRb (i.e., the central portion of the rendering region IR), and information regarding the transmission direction of data is rendered in the sub-region IRc.

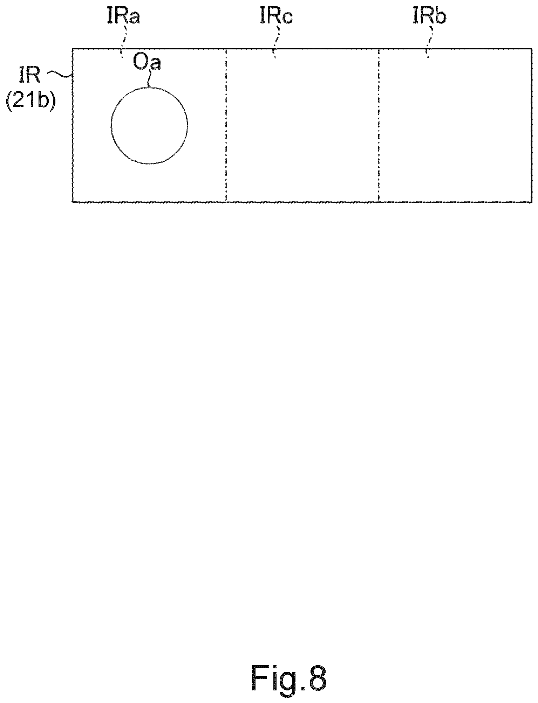

As shown in Fig. 8, the output information generation unit 32 renders a shape Oa corresponding to a transmission source node in the sub-region IRa of the rendering region IR generated in the processing of ACT12 (ACT13). The shape Oa has, for example, a solid circular shape.

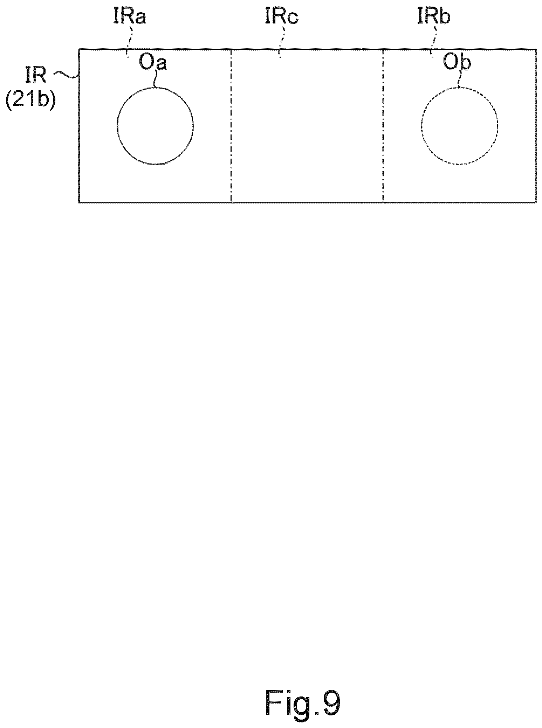

As shown in Fig. 9, the output information generation unit 32 renders a shape Ob corresponding to a transmission destination node in the sub-region IRb of the rendering region IR generated in the processing of ACT12 (ACT14). The shape Ob has, for example, a broken circular shape.

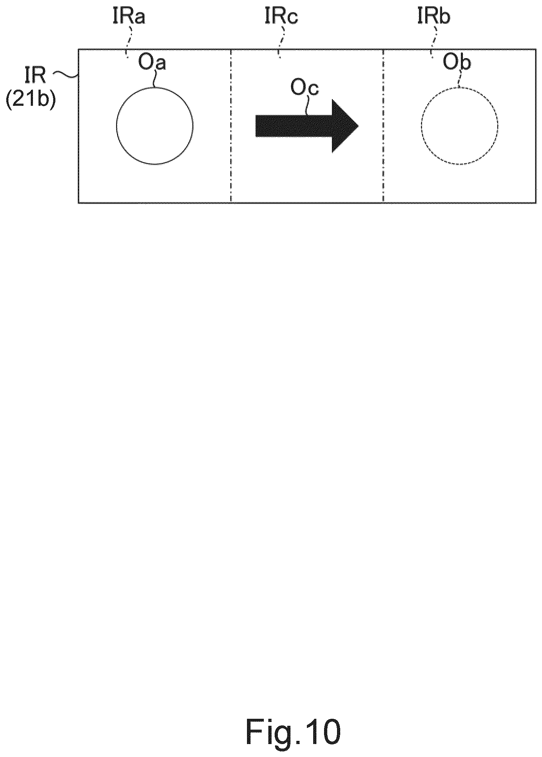

As shown in Fig. 10, the output information generation unit 32 renders a shape Oc in the sub-region IRc of the rendering region IR generated in the processing of ACT12 (ACT15). The shape Oc has a shape of an arrow directed from the shape Oa indicating a transmission source node to the shape Ob indicating a transmission destination node (i.e., direction from the left to the right of the rendering region IR).

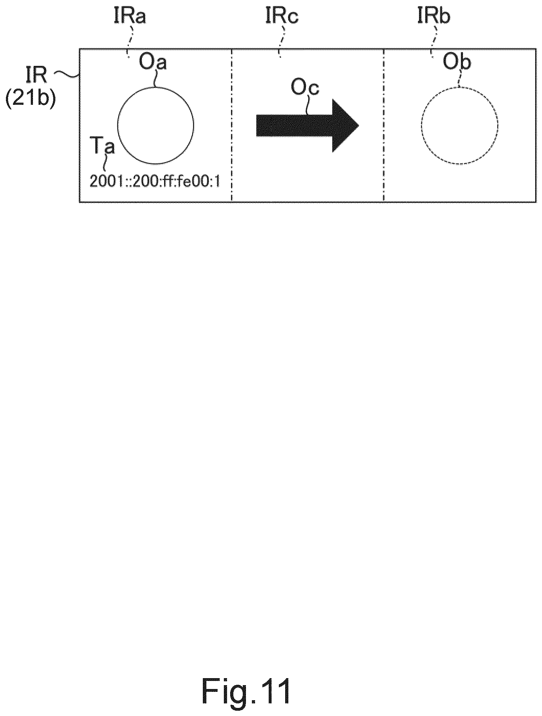

As shown in Fig. 11, the output information generation unit 32 refers to the routing table 34 and renders a text Ta indicating the IP address of the transmission source node in the sub-region IRa of the rendering region IR generated in the processing of ACT12 (ACT16). In the example shown in Fig. 11, the text Ta is the IP address "2002::200::ff::fe00:1" of the output apparatus 11 and is located below the shape Oa.

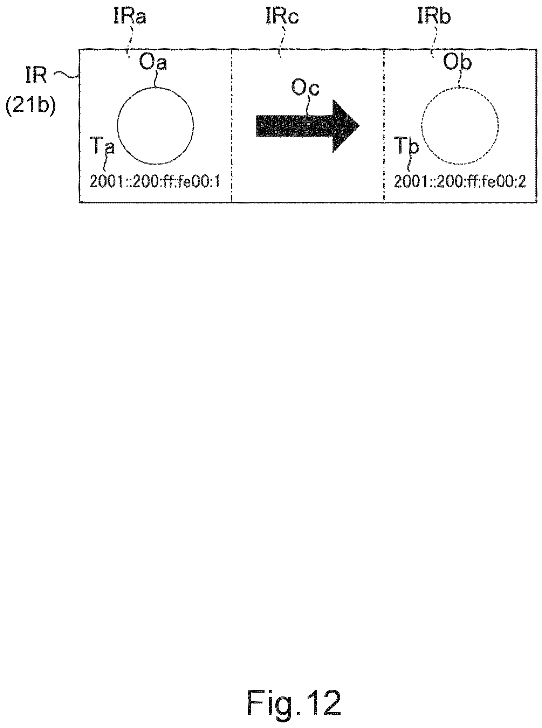

As shown in Fig. 12, the output information generation unit 32 refers to the routing table 34 and renders a text Tb indicating the IP address of the transmission destination node in the sub-region IRb of the rendering region IR generated in the processing of ACT12 (ACT17). In the example shown in Fig. 12, the text Tb is the IP address "2002::200::ff::fe00:2" of the output apparatus 12 and is located below the shape Ob.

Through the processing of ACT13 to ACT17, the output information generation unit 32 renders a directed graph G = (V,E) (|V| = 2, |E| = 1) in the rendering region IR to generate the directed graph G. In this case, V represents a vertex set and includes, as elements, the shape Oa corresponding to a transmission source node (its own output apparatus) and the shape Ob corresponding to a transmission destination node. E represents an edge set and includes, as an element, the shape Oc having a direction, which connects the shapes Oa and Ob that are elements of the vertex set V.

The output unit 33 outputs, after the processing of ACT13 to ACT17, the directed graph G rendered in the rendering region IR to the user via an output medium OUT (ACT18). That is, in the case where the output apparatus 11 is a printer, the output unit 33 outputs paper on which the directed graph G has been printed to the user. In the case where the output apparatus 11 is an electronic price tag or an electronic calculator, the output unit 33 outputs the screen on which the directed graph G has been displayed to the user.

When the processing of ACT18 ends, the output processing ends (End).

### 2.2 Display of general figure of mesh network

A user instructs each of the plurality of output apparatuses 11 to 14 constituting the mesh network 1 to execute output processing. Each of the plurality of output apparatuses 11 to 14 executes output processing in accordance with an input from the user. Thus, the user obtains the output medium OUT on which the directed graph G has been printed or displayed from the output apparatuses 11 to 14 one by one.

The user then disposes a plurality of output media OUT such that the shapes representing the same node overlap with each other. As a result, the user can obtain a general directed graph Gt corresponding to the general figure of the mesh network 1.

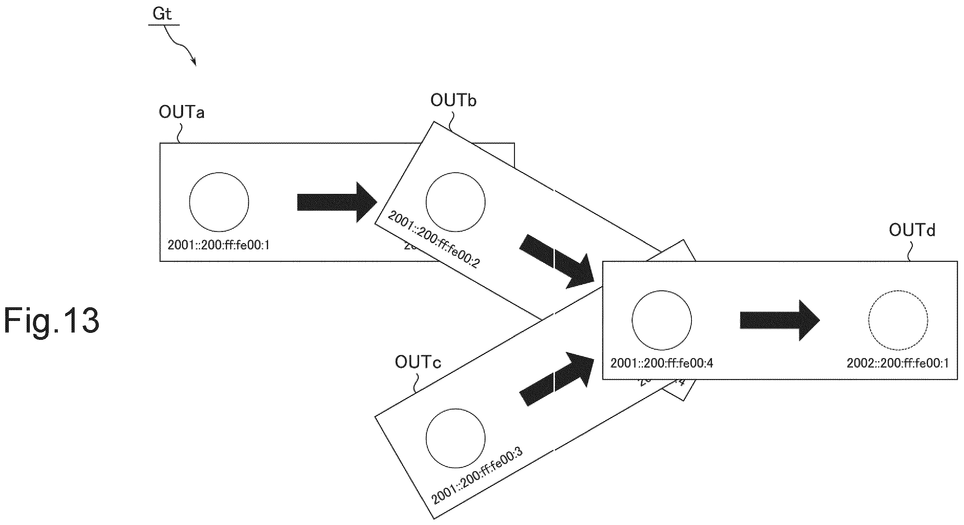

Fig. 13 is a diagram showing an example of a general directed graph corresponding to a general figure of a mesh network, which is based on the output processing in the output apparatus according to the embodiment.

As shown in Fig. 13, the general directed graph Gt includes output media OUTa, OUTb, OUTc, and OUTd. The output media OUTa, OUTb, OUTc, and OUTd are respectively output media obtained from the output processing of the plurality of output apparatuses 11, 12, 13, and 14.

In the example shown in Fig. 13, the text of the transmission destination node of the output medium OUTa and the text of the transmission source node of the output medium OUTb match, i.e., they represent the IP address "2002::200::ff::fe00:2". For this reason, the user disposes the output media OUTa and OUTb such that the shape of the transmission destination node of the output medium OUTa and the shape of the transmission source node of the output medium OUTb overlap with each other.

Further, the texts of the transmission destination nodes of the output media OUTb and OUTc and the text of the transmission source node of the output medium OUTd match, i.e., they represent the IP address "2002::200::ff::fe00:4". For this reason, the user disposes the output media OUTb, OUTc, and OUTd such that the shapes of the transmission destination nodes of the output media OUTb and OUTc and the shape of the transmission source node of the output medium OUTd overlap with each other.

In this way, the user can recognize that the mesh network 1 is equivalent to the general directed graph Gt = (Vt,Et) (|Vt| = 5, |Et| = 4).

Note that the user generates the general directed graph Gt by overlapping the output media OUT with each other. For this reason, in the case where the output medium OUT is paper, the output medium OUT is favorably formed of a material that allows the output medium OUT located behind when being overlapped to be seen through.

### 3. Effects of embodiment

According to an embodiment, the input reception unit 31 receives an output instruction indicating that output processing should be started. The output information generation unit 32 renders the directed graph G in the rendering region in accordance with the output instruction. The directed graph G includes a first vertex corresponding to a transmission source node, a second vertex corresponding to a transmission destination node, and an edge having the first vertex as a tail and the second vertex as a head, in the case where its own output apparatus is the transmission source node. The output unit 33 outputs the directed graph G in accordance with the output instruction. As a result, each of the plurality of output apparatuses 11 to 14 outputs, in accordance with the output instruction from the user, a directed graph having the number of vertices of two and the number of edges of one in the case where its own output apparatus is the transmission source node one by one. For this reason, the user can generate the general directed graph Gt by combining the plurality of directed graphs G corresponding to the plurality of output apparatuses 11 to 14. As described above, the general directed graph Gt includes the plurality of directed graphs G output individually. Therefore, the user can obtain the general figure of the mesh network 1 without a large display.

Further, the plurality of output apparatuses 11 to 14 can take the form of a printer. In the case where each of the plurality of output apparatuses 11 to 14 is a printer, the output unit 33 outputs the directed graph G via paper. In particular, in the case where each of the plurality of output apparatuses 11 to 14 is a mobile printer, the paper to be output has substantially a receipt size, and thus, it is difficult to output the general directed graph Gt collectively at once. However, according to this embodiment, each of the plurality of output apparatuses 11 to 14 outputs the directed graph G having the number of vertices of two and the number of edges of one, one by one. As a result, the user can obtain the general figure of the mesh network 1 without a large display by combining a plurality of directed graphs G.

Further, the plurality of output apparatuses 11 to 14 can take the form of an electronic price tag, an electronic calculator, or the like. In the case where each of the plurality of output apparatuses 11 to 14 is an electronic price tag or an electronic calculator, the output unit 33 outputs the directed graph G on a screen. In the case where each of the plurality of output apparatuses 11 to 14 is an electronic price tag or an electronic calculator, the screen to be displayed has substantially a receipt size, and thus, it is difficult to output the general directed graph Gt collectively at once. However, according to this embodiment, each of the plurality of output apparatuses 11 to 14 outputs the directed graph G having the number of vertices of two and the number of edges of one, one by one. As a result, the user can obtain the general figure of the mesh network 1 without a large display by combining a plurality of directed graphs G.

### 4. Modifications, etc.

Various modifications can be applied to the above-mentioned embodiment.

In the above-mentioned embodiment, the case where output processing is instructed the same number of times as the number of the plurality of output apparatuses 11 to 14 to obtain the general directed graph Gt of the mesh network 1 has been described. However, the plurality of output media OUT forming the general directed graph Gt may be output collectively from one output apparatus. That is, the user may instruct an output apparatus to perform output processing once to obtain the general directed graph Gt. The configuration and operation different from those in the embodiment will be mainly described below. Description of the configuration and operation equivalent to those in the embodiment will be omitted as appropriate.

In the mesh network 1 according to a modification, each of the plurality of output apparatuses 11 to 14 is a printer. One of the plurality of output apparatuses 11 to 14 according to the modification collectively stores routing information of all output apparatuses. Hereinafter, the output apparatus that collectively stores routing information of all output apparatuses will be referred to as a representative output apparatus. The representative output apparatus may be any of the plurality of output apparatuses 11 to 14. For the sake of description, assumption is made that the output apparatus 11 is the representative output apparatus below.

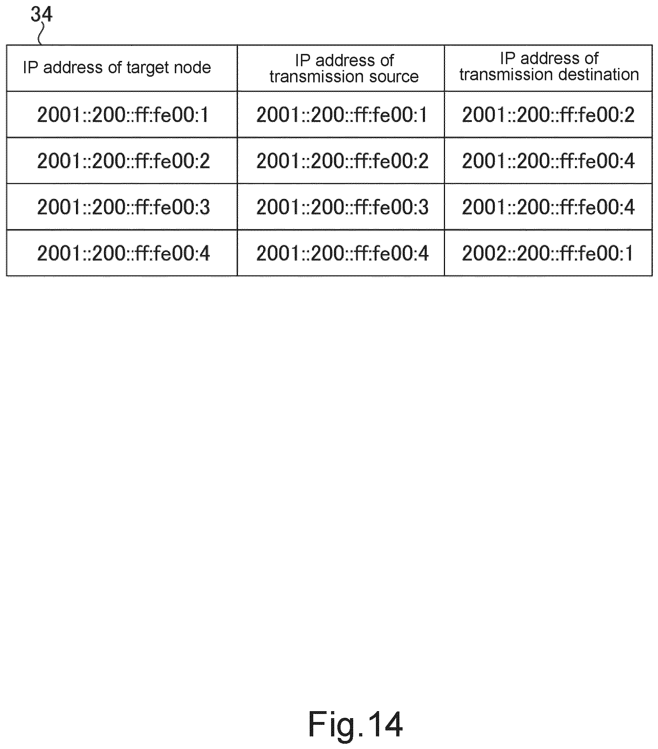

Fig. 14 is a diagram showing an example of a data structure of a routing table stored in the representative output apparatus according to the modification. As shown in Fig. 14, the routing table 34 stored in the representative output apparatus stores, for each node constituting the mesh network 1, a pair of an IP address of a transmission source node and an IP address of a transmission destination node.

In the example shown in Fig. 14, the routing table 34 stores routing information regarding four target nodes. The first routing information is routing information of a target node whose IP address is "2001::200::ff::fe00:1" (i.e., the output apparatus 11). The second routing information is routing information of a target node whose IP address is "2001::200::ff::fe00:2" (i.e., the output apparatus 12). The third routing information is routing information of a target node whose IP address is "2001::200::ff::fe00:3" (i.e., the output apparatus 13). The fourth routing information is routing information of a target node whose IP address is "2001::200::ff::fe00:4" (i.e., the output apparatus 14).

The representative output apparatus may collect routing information from each node when the mesh network 1 is constructed. Further, the processing of collecting routing information from each node may be performed by a server (not shown). In this case, the representative output apparatus receives the routing information of each node from the server and stores the collected information in the routing table 34.

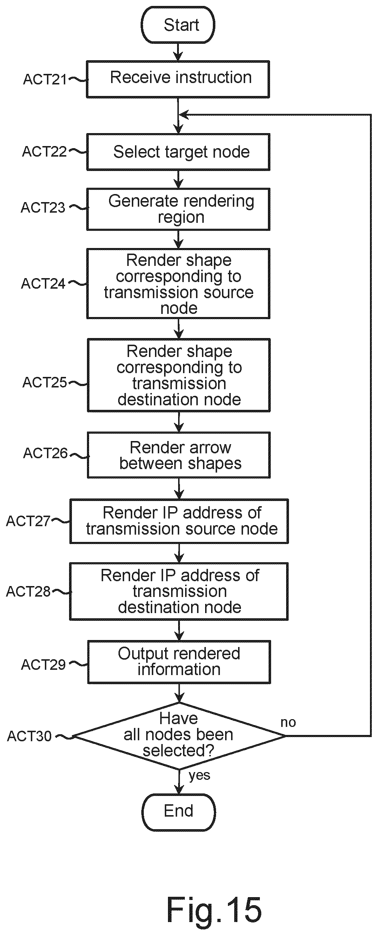

Fig. 15 is a flowchart showing an example of output processing in the representative output apparatus according to the modification. Fig. 15 corresponds to Fig. 6 in the embodiment.

As shown in Fig. 15, when a user presses the button Ska on the operation panel OP of the representative output apparatus (Start), the input reception unit 31 receives an input indicating that output processing should be started (ACT21).

Upon receiving the input indicating that output processing should be started, the output information generation unit 32 refers to the routing table 34 and selects a target node (ACT22).

The output information generation unit 32 generates the rendering region IR corresponding to the target node selected in the processing of ACT22 in the RAM 21b of the control circuit 21 (ACT23).

The output information generation unit 32 renders the shape Oa corresponding to the transmission source node in the sub-region IRa of the rendering region IR generated in the processing of ACT23 (ACT24).

The output information generation unit 32 renders the shape Ob corresponding to the transmission destination node in the sub-region IRb of the rendering region IR generated in the processing of ACT23 (ACT25).

The output information generation unit 32 renders the shape Oc in the sub-region IRc of the rendering region IR generated in the processing of ACT23 (ACT26).

The output information generation unit 32 refers to the routing information of the target node selected in the processing of ACT22, of the routing table 34. The output information generation unit 32 then renders the text Ta indicating the IP address of the transmission source node in the sub-region IRa of the rendering region IR generated in the processing of ACT23 (ACT27).

The output information generation unit 32 refers to the routing information of the target node selected in the processing of ACT22, of the routing table 34. The output information generation unit 32 then renders the text Tb indicating the IP address of the transmission destination node in the sub-region IRb of the rendering region IR generated in the processing of ACT23 (ACT28).

By the processing of ACT23 to ACT28, the output information generation unit 32 renders the directed graph G = (V,E) (|V| = 2, |E| = 1) regarding the target node selected in the processing of ACT22 in the rendering region IR.

The output unit 33 outputs the directed graph G regarding the target node rendered in the rendering region IR to the user via the output medium OUT (ACT29).

After the processing of ACT29, the output information generation unit 32 determines whether or not all target nodes in the routing table 34 have been selected (ACT30).

In the case where there is an unselected target node (ACT30; no), the output information generation unit 32 refers to the routing table 34 and selects the unselected target node (ACT22). The processing of subsequent ACT23 to ACT30 is then executed on the selected target node. In this way, the representative output apparatus repeatedly executes the processing of ACT22 to ACT30 until all target nodes are selected.

In the case where all target nodes have been selected (ACT30; yes), the output processing ends (End).

According to the modification, the output unit 33 of the representative output apparatus outputs, in accordance with the output instruction, the directed graph G in which the transmission source node is another output apparatus as well as the directed graph G in which the transmission source node is its own output apparatus. That is, the output unit 33 of the representative output apparatus outputs a plurality of directed graphs G one by one. As a result, the user can obtain the plurality of directed graphs G from the representative output apparatus without individually performing an output instruction on all output apparatuses 11 to 14. In this way, it is possible to reduce the number of times the user inputs an output instruction.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An output apparatus as a first node in a network including the first node and a second node, comprising:
an input device that inputs an output instruction of a directed graph, the directed graph including a first vertex corresponding to a transmission source node that is a transmission source of a packet, a second vertex corresponding to a transmission destination node that is a transmission destination of the packet of the transmission source node, and an edge having the first vertex as a tail and the second vertex as a head;
an output device that outputs the directed graph;
a routing table that stores routing information of the first node and the second node in the network; and
a processor configured to
receive the output instruction of the directed graph input by the input device,
refer to the routing information stored in the routing table in accordance with the output instruction upon receiving the output instruction of the directed graph to generate the directed graph in which the first node is associated with the transmission source node and the second node is associated with the transmission destination node, and
cause the output device to output the generated directed graph.

2. The output apparatus according to claim 1, wherein
the output apparatus is a printer, and
the output device outputs the directed graph via paper.

3. The output apparatus according to claim 1 or 2, wherein
the network includes a plurality of second nodes, and
the processor is further configured to generate a first directed graph in which the first node is associated with the transmission source node and one node of the plurality of second nodes is associated with the transmission destination node.

4. The output apparatus according to claim 3, wherein
the processor is further configured to generate a second directed graph in which the one node of the plurality of second nodes is associated with the transmission source node and another node of the plurality of second nodes is associated with the transmission destination node.

5. The output apparatus according to claim 3, wherein
the processor is further configured to generate a plurality of the second directed graphs in which each of the plurality of second nodes is associated with the transmission source node.

6. The output apparatus according to claim 4, wherein
the processor is further configured to individually output each of the first directed graph and the second directed graph via paper.

7. The output apparatus according to any of claims 1 to 6, wherein
the output apparatus is a mobile printer.

8. The output apparatus according to any one of claims 1 to 7, wherein
the output apparatus is an electronic price tag or an electronic calculator, and
the output device outputs the directed graph via a screen.

9. The output apparatus according to any one of claim 1, wherein
the routing information stored in the routing table includes an address of the first node as an address of the transmission source and includes an address of the second node as an address of the transmission destination.

10. The output apparatus according to any one of claims 3 to 9, wherein
the processor is further configured to collect, from each of the plurality of second nodes, routing information of each of the plurality of second nodes.

11. A mesh network comprising a plurality of output apparatuses according to any one of claims 1 to 10 as nodes.

12. The mesh network according to claim 11 further comprising a device that connects the plurality of output apparatuses to an external network.
